Europäisches Patentamt

European Patent Office

Office européen des brevets

(19)

(11) **EP 0 541 004 B1**

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int. Cl.$^6$: **B60C 11/00**

(21) Anmeldenummer: **92118488.3**

(22) Anmeldetag: **29.10.1992**

(54) **Umlaufend bewegliches Bauteil mit Grössenfolge**

Construction part in circular movement with a "pitch" sequence

Elément de construction à mouvement circulaire présentant une séquence de pas différents

(84) Benannte Vertragsstaaten:
**BE DE ES FR GB IT**

(30) Priorität: **02.11.1991 DE 4136226**

(43) Veröffentlichungstag der Anmeldung:
**12.05.1993 Patentblatt 1993/19**

(73) Patentinhaber: **Continental Aktiengesellschaft D-30165 Hannover (DE)**

(72) Erfinder: **Kleinhoff, Klaus W-3054 Rodenberg (DE)**

(56) Entgegenhaltungen:
**EP-A- 0 268 436          EP-A- 0 438 108
US-A- 3 023 798          US-A- 5 027 875**

**Beschreibung**

Die Erfindung bezieht sich auf ein umlaufend bewegliches Bauteil nach dem Oberbegriff des Patentanspruches 1. Die Aufzählung aufeinanderfolgender Größen in ihrer Reihenfolge auf dem umlaufend beweglichen Bauteil heiße nachfolgend "Größenfolge". Die geometrisch konkretisierte Gestalt innerhalb eines jeden Schrittes ist als eine Verknüpfung einer variierenden Größe (insbesondere Winkel oder Bogenlänge) in der Umlaufrichtung mit zumindest einem, der Größe in der Umlaufrichtung nach zu variierenden Muster aufzufassen.

Ob es auf dem umlaufend beweglichen Bauteil nur ein - wie in den meisten Fällen - oder mehrere, eine Musterfolge bildende Muster gibt, und wie sie konkret gestaltet sind, ist für vorliegende Erfindung, abgesehen von eventuellen Randbedingungen, uninteressant; es kommt hier nur auf die Größenfolge an.

Die bei Bewegung des Bauteiles relativ zu einem anderen, an sich bekannten Bauteil nacheinander wirksam werdenden Kraftübertragungselemente generieren eine Folge akustischer Einzelereignisse, die sich zu einem Geräusch zusammensetzen. Durch das Schwanken der aufeinander folgenden Größen wird, wie an sich bekannt, eine Frequenzmodulation des Geräusches bewirkt.

Als umlaufend bewegliches Bauteil wird insbesondere ein Fahrzeugreifen mit Querrillen betrachtet. Querrillen sind Rillen, deren Erstreckung zumindest eine Komponente in der Axialen aufweisen. Sie sind im Sinne des ersten Absatzes "Negative". Daß in der Reifenfachsprache auch Längsrillen als Negative bezeichnet werden, stört nicht, denn für die Erfindung ist Vorhanden- oder nicht Vorhandensein von Längsrillen belanglos.

Zwischen je zwei benachbarten Negativen befindet sich ein kraftübertragendes Positiv; im häufigsten Fall, wo die Querrillen von einer Längsrille zur nächsten reichen, also jedes Positiv rundum von Rillen begrenzt ist, werden die Positive auch als Blöcke oder Klötze bezeichnet. Die Positive übertragen insbesondere die Normalkraft aufgrund des Fahrzeuggewichtes sowie Tangentialkräfte (Bremsen, Beschleunigen, Kurvenfahrt).

Als umlaufend bewegliches Bauteil ist auch ein flankenoffener Keilriemen zu betrachten. Bei ihm sind - zur Erhöhung der Biegewilligkeit und damit zur Verringerung der Walkleistung - etwa axial verlaufende Einschnitte in den Flanken in Abständen angeordnet. Diese Einschnitte sind im Sinne des ersten Absatzes Negative. Die zwischen je zwei Einschnitten stehen bleibenden Riemenflanken sind Kraftübertragungselemente oder Positive. Deren Ein- und Auslauf in die bzw. aus den Riemenscheiben bewirkt ein Folge akustischer Einzelereignisse.

Zurückkommend auf den dritten Absatz der Seite 1 ist im Falle der Anwendung der Erfindung auf Fahrzeugreifen das andere, an sich bekannte Bauteil die Fahrbahnoberfläche. Bei einem flankenoffenen Keilriemen ist hingegen das andere Bauteil die Antriebsscheibe bzw. Abtriebsscheibe.

Ein "akustisches Einzelereignis" ist im Unterschied zu einem stationären Geräusch dadurch gekennzeichnet, daß es einen zeitlichen Anfang und ein durch rasches Abklingen gegebenes zeitliches Ende aufweist. Beispielsweise ist ein Trommelschlag ein akustisches Einzelereignis. Auch können Anfang und Ende eines im übrigen stationären Tones als akustische Einzelereignisse aufgefaßt werden.

Eine völlig gleichmäßige Verteilung der Negative auf dem Umfang des umlaufend beweglichen Bauteiles führt zu einem als Ton empfundenen Geräusch, das schon nach kurzer Zeit aufdringlich und unangenehm wirkt. Im Frequenzspektrum sind nur wenige Frequenzen mit hohen Pegeln erkennbar, wobei die Frequenzen zur Grundfrequenz f in ganzzahligem Verhältnis stehen.

Für Fahrzeugreifen ist beispielsweise die Grundfrequenz f bestimmt durch die Anzahl n der Querrillen auf dem Umfang, den Abrollumfang U und die Fahrgeschwindigkeit v nach:

$$f[Hz] = v\ [km/h] \times \frac{n}{3,6} \times \frac{1}{U[m]}$$

Sowohl an Fahrzeugreifen als auch an flankenoffenen Keilriemen ist es bekannt, eine Frequenzmodulation durch Abstandsvariation der kraftübertragenden Positive oder der Negative zu erzielen. Die später erläuterte Erfindung offenbart eine besondere Art der Größenvariation und bewirkt damit eine besondere Art der Frequenzmodulation.

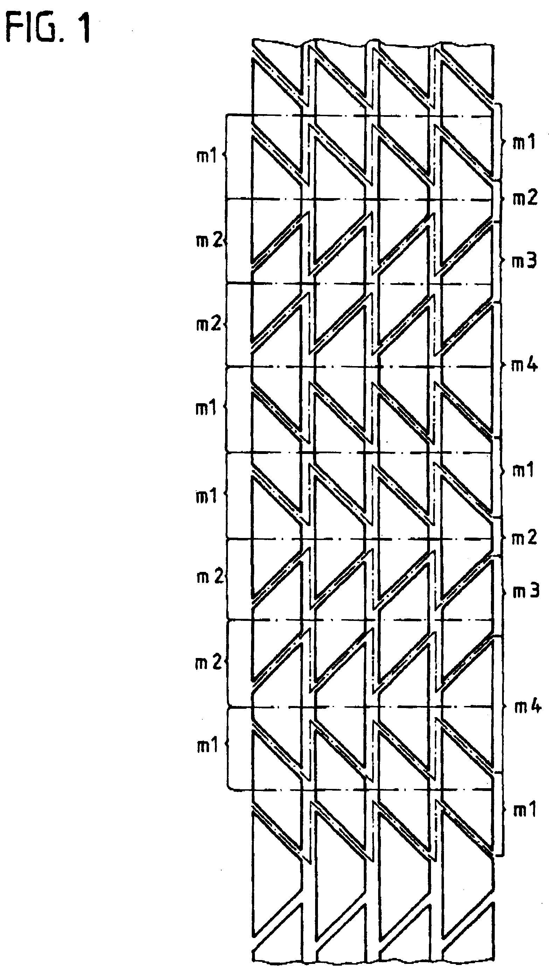

Obwohl bei den meisten gattungsgemäßen Bauteilen nur ein einziges Muster zur Definition der Form der Negative oder der Positive verwendet ist, ist auch eine Vielzahl q verschiedener Muster möglich, wie Figur 1 erläutert.

Die Negative, hier die Querrillen eines Fahrzeugreifens, sind in ihrer Abfolge aus zwei (q=2) verschiedenen, sich regelmäßig wiederholenden Mustern gebildet. Das Muster $m_1$ zeigt eine von links oben nach rechts unten verlaufende Querrille, während das Muster $m_2$ eine von rechts oben nach links unten verlaufende Querrille zeigt. Die Musterfolge lautet:

$m_1$ , $m_2$ , $m_2$ , $m_1$ , $m_1$ , $m_2$ , $m_2$ , $m_1$ , ..

Würden nicht die Negative sondern die Positive durch eine Musterfolge beschrieben, reichten nicht zwei verschiedene Muster aus, sondern es wären vier erforderlich (q=4) und zwar in einem Muster 1 ein Parallelogramm mit Spitzen links oben und rechts unten,
in einem Muster 2 ein sich nach rechts verjüngendes Trapez, in einem Muster 3 ein Parallelogramm mit Spitzen rechts oben und links unten, und
in einem Muster 4 ein sich nach links verjüngendes Trapez. Die zuerst vorgestellte Grenzziehung zwischen den Mustern ist offenbar geschickter, weil sie mit geringerer Anzahl verschiedener Muster die gleiche Formenvielfalt erzeugt. Die zugehörige Musterfolge ist links in der Figur genannt, die andere rechts. Unabhängig davon zeigt die Äquivalenz beider Beispiele, daß die Art der gewählten Grenzziehung nicht die mögliche Form der Negative oder Positive beschränken muß.

Soviel zur Erleichterung des Verständnisses möglicher Konkretisierungen; zurück zum wesentlichen, den Größenfolgen (engl.: pitch sequences).

Allen Spezialisierungen des Erfindungsgegenstandes (wie Reifen oder Riemen) ist gemein, daß sich wegen der Umläufigkeit der Bewegung eine bestimmte Periodendauer ergibt, nach deren Ablauf sich jeweils alle akustischen Einzelereignisse in unveränderter Reihenfolge wiederholen. Um die Betrachtung unabhängig von der jeweiligen Drehgeschwindigkeit durchführen zu können, wird zweckmäßigerweise als rein geometrische Größe der Begriff "Periode" verwendet. Bei Fahrzeugreifen ist es zweckmäßig, als Periode den Vollwinkel (360°), bei Riemen deren Umfangslänge zu definieren. Die Aufaddierung aller Größen der Folge muß die Periode ergeben.

Die Gesamtanzahl aller Schritte einer Größenfolge heißt nachfolgend n. Die Vielzahl unterschiedlicher Größen heißt nachfolgend m. Diese Vielzahl m liegt zwischen 2 und der Vielzahl n, jeweils einschließlich.

An PKW-Reifen liegt n üblicherweise zwischen 50 und 80, an Reifen für Straßen-LKW zwischen 40 und 75, an Reifen für geländegängige Fahrzeuge etwa zwischen 20 und 60 und an flankenoffenen Keilriemen etwa zwischen 100 und 250.

Die Vielzahl m unterschiedlicher Schrittgrößen liegt bei PKW-Reifen üblicherweise zwischen 2 und 6, bei anderen Reifen beträgt sie üblicherweise 2 oder 3, bei Riemen liegt sie üblicherweise zwischen 2 und 5; die Zahlenangaben der beiden letzten Abschnitte beschränken den Schutzumfang nicht.

Der Erfindung geht es darum, die Frequenzzusammensetzung der unvermeidlicherweise infolge der diskontinuierlichen Kraftübertragung entstehenden Geräusche so zu gestalten, daß sie als möglichst angenehm empfunden wird.

Die zunächst prinzipielle Subjektivität jeglicher Aussage zur Angenehmheit wird durch Mittelung einer Vielzahl von Versuchen sowie direktes Vergleichshören konservierter Geräusche objektiviert, d.h. reproduzierbar gemacht. Nachdem bekannt ist, daß für die Empfindung eines Geräusches die Phasenlage der verschiedenfrequenten Schwingungsanteile nur von untergeordneter Bedeutung ist, ist das "Frequenzspektrum" die wesentliche graphische Objektivierung eines Geräusches. Unter "Frequenzspektrum" wird im folgenden ein Diagramm in cartesischen Koordinaten verstanden, auf dessen Abszisse die Frequenz und auf dessen Ordinate die zugehörige Amplitude aufgetragen ist.

Nachdem sich die Subjektivbewertung, das heißt die Angenehmheit, durch die Nivellierung des Frequenzspektrums besserte, zielte die weitere Entwicklung auf solche Schrittgrößenfolgen, die eine möglichst weitgehende Nivellierung aller Spitzen im Frequenzspektrum bewirken, im Extremfall also dazu führen, daß im interessierenden Frequenzintervall alle Amplituden gleich hoch sind.

Es kann eine umso gleichmäßigere Verteilung der unvermeidlichen Schall-Leistung auf ein breites Frequenzspektrum erzielt werden, desto größer das Verhältnis des größten Schrittes zum kleinsten ist; dieses Verhältnis wird im folgenden maximales Größenverhältnis $V_{max}$ genannt.

Auf das Beispiel der Fahrzeugreifen zurückkommend gilt, daß in Umfangsrichtung große Profilblöcke steifer sind gegenüber durch Längskräfte verursachter Biegung als in Umfangsrichtung kleine Profilblöcke. Die in Umfangsrichtung großen Profilblöcke übernehmen deshalb einen überproportionalen Anteil der Längskräfte, was den Verschleiß der größeren Profilblöcke im Verhältnis zu den kleineren erhöht.

Hingegen setzen die in Umfangsrichtung größeren Profilblöcke der Abplattung in der Aufstandsfläche größeren Widerstand entgegen und übernehmen deshalb einen überproportional großen Anteil der Normalkräfte. Dies vermindert Schlupf und Abrieb der größeren Profilblöcke im Verhältnis zu den kleineren.

Die Überlagerung beider Effekte stellt sich schon an ein und demselben Reifen an den Laufflächenrändern anders ein als in der Laufflächenmitte. Zwar läßt sich die verbleibende Differenz beider Effekte durch eine gezielte, zur Klotzerweichung führende Lamellierung weiter senken, aber meistens verbleibt ein Ungleichgewicht zwischen beiden gegenläufigen Effekten.

Um keine zu großen systematischen Reifenunrundheiten gegen Ende der Lebensdauer zu erzeugen, muß das maximale Größenverhältnis auf umso kleinere Werte begrenzt sein, desto größer die Profiltiefe ist. Bei LKW-Reifen liegt das maximale Größenverhältnis üblicherweise zwischen 1,15 und 1,45, bei PKW-Reifen zwischen 1,30 und 1,60. Bei flankenoffenen Keilriemen kann das maximale Größenverhältnis $V_{max}$ größer gewählt werden, etwa bis 1,8.

Die Anzahl der in einer Größenfolge angeordneten Schritte einer Größe $g_x$ heißt im Rahmen dieser Anmeldung "$n_x$".

Die kleinste Größe einer Größenfolge wird im folgenden mit $g_1$, die zweitkleinste mit $g_2$ und so weiter bezeichnet bis zur größten Größe, die mit $g_m$ bezeichnet wird.

Stand der Technik für Größenfolgen von Fahrzeugreifen sind die US-PS 4,474,223 und 4,327,792, aus denen bekannt ist, daß die Schritte (dort Musterzyklen genannt) in eine Vielzahl von mindestens drei vollständigen Modulationszyklen eingeteilt sind und die Größenfolge in jedem "harmonischen" Segment verschiedene Teilfolgen aufweisen und die abgerundeten Bruchteile ihrer Umfänge (mindestens) drei verschiedenen Anteilen der harmonischen Folge zwischen 1/2 und 1/9 entsprechen. Wegen der Proportionalität der Segmentlängen zu Gliedern der harmonischen Folge heißen die Segmente "harmonisch".

Die Modulationswellenlänge innerhalb jedes harmonischen Segmentes soll der Länge dieses harmonischen Segmentes selbst entsprechen. Innerhalb jedes harmonischen Segmentes wird die Größe der Schritte allmählich von einem Extrem zum anderen und zurück in etwa sinusartiger Form geändert. In beiden US-Patenten sind die Verhältnisse zwischen verschiedenen Größen der Schritte nicht festgelegt. Die Häufigkeit der verschiedenen Größen soll gleich sein.

Die DE-OS 36 30 590 lehrt die Zusammensetzung einer Größenfolge unter ausschließlicher, unverändert wiederholter Verwendung von vier verschiedenen Ausschnitten I, II, III und IV. IV.

Der nachfolgend verwendete Begriff "benachbartes Größenverhältnis $V_x$" wird wie folgt definiert:

Für alle x aus den natürlichen Zahlen von 1 bis m-1 soll gelten:

$$V_x = \frac{g_x + 1}{g_x}$$

Diese allgemeingültige Definition sei nachfolgend anhand eines Beispieles mit m=4 erläutert:

$g_2/g_1$ ist das benachbarte Längenverhältnis $V_1$,

$g_3/g_2$ ist das benachbarte Längenverhältnis $V_2$ und

$g_4/g_3$ ist das benachbarte Längenverhältnis $V_3$.

Zur weitest möglichen Nivellierung des Frequenzspektrums schlägt die EP-OS 0 268 436 (die den Oberbegriff des Anspruchs 1 bildet), insbesondere in den Figuren 6 bis 9 vor, die benachbarten Größenverhältnisse auf einen Wert zwischen 1,1 und 1,2 festzulegen und das maximale Größenverhältnis auf einen Wert zwischen 1,5 und 1,9.

Bei der Entwicklung von Profilschrittfolgen sind sehr viele Folgen möglich, jedoch nur sehr wenige günstig. Nach Festlegung der Größenverhältnisse und der Anzahlen $n_x$ liegt die Anzahl P der möglichen Folgen (das sind die Permutationen im geschlossenen Ring) zwischen

$$\frac{(n-1)!}{2\, n_1!\, n_2!\, ...n_x!\, ...\, n_m!}$$

und

$$\frac{n!}{2\, n_1!\, n_2!\, ...n_x!\, ...\, n_m!}$$

Als Beispiel sei angenommen, daß für eine Folge mit 75 Schritten neben den Größenverhältnissen festgelegt sei: m=3 und $n_1=n_2=n_3=25$. Selbst mit diesen engen Vorgaben liegt die Anzahl P der verschiedenen Folgen zwischen $4{,}432 \cdot 10^{31}$ und $3{,}324 \cdot 10^{33}$.

Unter Einsatz der leistungsfähigsten Großrechner gelingt die simulierende Analyse des Spektrums der Anregungsfrequenzen von etwa $10^8$ Folgen pro Tag. Zur Analyse aller Folgen sind dann mindestens $1{,}214 \cdot 10^{21}$ Jahre nötig. In diesem Ergebnis ist noch nicht berücksichtigt, daß auch andere Größen und andere Häufigkeiten der unterschiedlichen Größen möglich sind.

Aufgabe der Erfindung ist es, für gegeneinander umlaufend bewegliche Bauteile mit diskontinuierlicher Kraftübertragung durch verbesserte Frequenzmodulation solche Frequenzspektren zu schaffen, die auf das menschliche Ohr besonders wenig unangenehm wirken. Diese Aufgabenstellung berücksichtigt die Erkenntnis, daß verschiedene Geräusche gleichen Pegels bezüglich ihrer Annehmlichkeit sehr differieren können.

Für m gleich oder größer 3 wird die Aufgabe erfindungsgemäß durch die kennzeichnenden Merkmale des Anspruches 1 gelöst, vorzugsweise mit beiden der zwei Alternativmerkmale; für m = 2 durch Anspruch 2 .

Als weiterer Begriff wird die "natürliche Potenz" eingeführt, womit eine Potenz mit einem solchen Exponenten gemeint ist, der zu den natürlichen Zahlen gehört.

Mit dem neuen Begriff "Transposition" eines Ausschnittes einer Größenfolge wird nachfolgend dessen maßstabsgetreue Streckung oder Stauchung verstanden. Transponiert werden sollen nur Ausschnitte, die mindestens zwei verschiedene Größen umfassen.

Wichtiger Sinn des kennzeichnenden Merkmales der Anspruchs 1 ist der, Transpositionen zu ermöglichen. Die möglichen Transpositionen lassen sich besonders leicht angeben, wenn alle $V_x$ gleich sind; auf den Index "x" kann dann verzichtet werden. Die verschiedenen Transpositionen eines Ausschnittes liefern wegen der unveränderten Beibehaltung aller Größenverhältnisse der Schritte zueinander ähnliche akustische Wirkungen; es wird nämlich lediglich das Niveau aller Anregungsfrequenzen verändert (bei Stauchung erhöht, bei Streckung verringert), während alle Frequenzverhältnisse und damit der Grad der Tonalität bzw. Atonalität erhalten bleiben. Erfindungsgemäß sollen als Streck- bzw. Stauchfaktoren nur natürliche Potenzen von V verwendet sein.

Mit der Anzahl m der zur Verfügung stehenden verschiedenen Schrittgrößen und der Anzahl a der im betrachteten Ausschnitt umfaßten verschiedenen Profilschrittlängen beträgt für den besonders wichtigen Sonderfall, daß alle benachbarten Größenverhältnisse $V_x$ gleich V sind, die Anzahl t der Transpositionsmöglichkeiten:

$$t = m - a$$

Zur weiteren Erläuterung dessen, was transponierte Ausschnitte sind, wird ein kleines Beispiel eingeflochten:

Es sei m=5 und für alle x von 1 bis 4 gelte $V_x=V$ . Betrachtet werde der Ausschnitt:

$g_2$, $g_2$, $g_3$, $g_4$, $g_4$, $g_3$, $g_4$.

Dieser Ausschnitt umfaßt die Schrittgrößen von $g_2$ bis $g_4$ also a=3 (Die Existenz von $g_3$ im Ausschnitt hat keine Bedeutung, sondern es kommt nur auf die Extremlängen des Ausschnittes an und darauf, wie viele verschiedene Längen dazwischen möglich - nicht unbedingt tatsächlich ausgenutzt sind). Zu obigem Ausschnitt gibt es also noch zwei Transpositionen und zwar die Streckung:

$g_3$, $g_3$, $g_4$, $g_5$, $g_5$, $g_4$, $g_5$

und die Stauchung:

$g_1$, $g_1$, $g_2$, $g_3$, $g_3$, $g_2$, $g_3$.

Als Oberbegriff der nunmehr erläuterten Transposition wird der Begriff der "Abwandlung" definiert. Als weitere Abwandlung wird die "Inversion" eingeführt.

Unter "Inversion" eines Ausschnittes wird nachfolgend dessen Spiegelbild mit genau umgedrehter Reihenfolge der Größen verstanden. Durch Invertierung ändern sich die Größenverhältnisse nicht. Als weiterer Spezialfall der hier definierten "Abwandlung" wird auch der zugrunde liegende Ausschnitt selbst betrachtet.

Für Verknüpfungen - auch gemischte - aus Inversion und Transposition gilt das Kommutativ- und das Assoziativgesetz. Die beschriebene Bildung von Abwandlungen eines Ausschnittes ist neu. Weil alle $V_x$ natürliche Potenzen von V sind, liegen in allen verschiedenen Abwandlungen die gleichen Größenverhältnisse vor.

Nach einer bevorzugten Weiterbildung der Erfindung besteht die gesamte Größenfolge eines umlaufend beweglichen Bauteiles mit diskontinuierlicher Kraftübertragung gegenüber einem an sich bekannten weiteren Bauteil ausschließlich aus - mindestens drei verschiedenen - Abwandlungen eines einzigen Folgenausschnittes. Die kleine Vielzahl aneinander gereihter Abwandlungen heißt nachfolgend $m_a$.

Vorteilhafterweise liegt bei PKW-Reifen $m_a$ zwischen 3 und 6 , bei flankenoffenen Keilriemen zwischen 4 und 9 einschließlich. $m_a$ sollte umso größer gewählt werden, desto größer n und desto kleiner m ist.

Nachfolgend wird der Kürze halber an Stellen, wo klar ist, daß von Ausschnitten aus Größenfolgen die Rede ist, nur noch eine verkürzte Schreibweise angegeben, die dadurch aus der ausführlichen Darstellung abgeleitet wird, daß auf die "g" und die Kommas verzichtet wird. Statt ausführlich:

$g_1$, $g_1$, $g_2$, $g_3$, $g_3$, $g_2$, $g_3$

kann dann wie folgt geschrieben werden:

1 1 2 3 3 2 3

Eine besonders anschauliche Aufzählung und Symbolisierung aller Abwandlungen ist möglich, wenn eine der beiden kürzesten Abwandlungen an den Anfang gestellt wird. Diese wird nachfolgend als "Thema" bezeichnet und in der Kurzdarstellung mit 0 eingetragen.

Eine sich durch Multiplikation mit $V^1$ ergebende Transposition wird mit I bezeichnet. Eine Transposition, die sich durch Multiplikation des Themas mit $V^2$ ergibt, wird mit II bezeichnet, und so weiter; kurzum die römische Ziffer nennt den Exponenten der jeweiligen Transposition ausgehend vom Thema. Ein waagerechter Strich unter diesen Symbolen deutet auf eine Inversion hin. Nachfolgend sollen sämtliche möglichen (reellen) Transpositionen entsprechend dem vorgenannten Beispiel aufgezählt werden:

| Ausführlich: | Symbol: |
|---|---|
| 1 1 2 3 3 2 3 | 0 |
| 3 2 3 3 2 1 1 | <u>0</u> |
| 2 2 3 4 4 3 4 | I |
| 4 3 4 4 3 2 2 | <u>I</u> |
| 3 3 4 5 5 4 5 | II |
| 5 4 5 5 4 3 3 | <u>II</u> |

Während gemäß der Abschätzung von Seite 10 für eine 75er-Folge selbst bei Festlegung der verschiedenen Schritthäufigkeiten $n_x$ und der geringen Anzahl (m=3) unterschiedlicher Schrittlängen mehr als $4{,}4 \cdot 10^{31}$ Folgen möglich sind, ist die Anzahl möglicher Ausschnitte viel geringer; bei einer Schrittanzahl $n_a$ eines Ausschnittes von beispielsweise 18 bei ansonsten gleichen Bedingungen beträgt die Anzahl P aller verschiedenen Möglichkeiten

$$P = \frac{18!}{6!^3} = 2^5 x 3^2 x 7^2 x 11 x 13 x 17 = 34.306.272$$

Die zur Analyse sämtlicher möglichen Ausschnitte nötige Rechenzeit bei Analyse von $10^8$ Folgen pro Tag ist von über $10^{21}$ Jahren auf etwa acht Stunden geschrumpft. Der erforderliche Rechenaufwand ist somit beherrschbar geworden. Später behandelte Weiterbildungen der Erfindung dienen dem Ziel, durch weitere Merkmale die Anzahl der Möglichkeiten noch weiter zu verringern, so daß unter den verbleibenden Möglichkeiten die beste noch leichter herausgefunden werden kann.

Zunächst muß es als Nachteil der Erfindung erscheinen, daß innerhalb eines Ausschnittes, der transponierbar sein soll, nicht das maximale Profilschrittlängenverhältnis $V_{max}$ ausgeschöpft werden kann; insbesondere scheint für Folgen mit m=2 keine Ausschnitttransposition außer um natürliche Potenzen von 2 möglich zu sein.

Wie nachfolgend gezeigt, wird dieses Problem im Falle m=2 durch das kennzeichnende Merkmal des Anspruches 2 gelöst, für m>2 durch Weiterbildung der Erfindung gemäß Anspruch 5 besonders elegant lösbar. In beiden Fällen wird als benachbartes Größenverhältnis V die m-te Wurzel von 2 festgelegt. Nach solcher Bemessung läßt sich der zuvor bezeichnete Nachteil gemäß Anspruch 7 dadurch überwinden, daß "virtuelle" Schrittgrößen eingeführt werden. Oberhalb der größten reellen Schrittgröße $g_m$ werden größere Größen "virtuell" dadurch erzeugt, daß zwei gleichgroße Schritte (Repetition) gleicher Größe hintereinander angeordnet werden und beim Zusammenstellen der Schrittgrößenfolge wie ein einziger Schritt behandelt werden. Entsprechendes gilt wenn als Radikant statt der 2 die 3 verwendet wird.

Das Verhältnis der Größe eines solchermaßen geschaffenen Doppelschrittes zur größten reellen Schrittgröße $g_m$ ist wiederum entsprechend den Ansprüchen 1 und 2 eine Potenz mit natürlichem Exponenten des Größenverhältnisses V.

Zur Erläuterung wird als Beispiel auf den zuletzt genannten Ausschnitt II zurückgegriffen; die nächst längere - nur noch virtuell mögliche - Transposition nach

3 3 4 5 5 4 5

lautet:

4 4 5 1 1 1 1 5 1 1.

Dabei ist jeder Schritt $g_5$ zum Doppelschritt $g_1$, $g_1$ abgewandelt. Die nächstgrößere virtuelle Schrittgröße nach dem Doppelschritt $g_1$, $g_1$ liefert der Doppelschritt $g_2$, $g_2$. Die Bildung noch größerer virtueller Schrittgrößen nach gleichem Schema findet erst dort ihre Grenze, wo die Bogenlänge bzw. der Gesamtwinkel hintereinander angeordneter, gleicher Schritte im Verhältnis zum Gesamtumfang bzw. Vollwinkel zu lang würde.

Bei Reifen ist die zulässige Anzahl der Repetitionen so zu begrenzen, daß die sich allmählich ergebenden Unrundheiten durch die Abriebunterschiede zwischen (in Umfangsrichtung) großen und kleinen Blöcken nicht zu groß werden; in der Regel soll die größte Repetition höchstens 9 % der Periode (Vollwinkel) einnehmen.

Bei Riemen sind Repetitionen etwa bis zur halben Umfangslänge der kleinsten Riemenscheibe des betreffenden Riementriebes möglich; bei kurzen Trumen ist eine Repetitionslänge etwa bis zu 16 % der Riemenumfangslänge möglich.

Umso kleinere Repetitionen der zugrunde liegende Ausschnitt selbst aufweist und umso größere Repetitionen zulässig sind, desto mehr Transpositionen sind in den virtuellen Bereich möglich.

Bei der Wahl eines ø>0 unterliegt die Auswahl eines geeigneten Ausschnittes und dessen Transpositionsmöglichkeiten dadurch gewissen Begrenzungen, daß einerseits (reelle) Profilschrittlängen größer $g_m$ vermieden werden müssen, andererseits aber die nächstgrößere Schrittgröße nicht virtuell dargestellt werden kann. Diese Einschränkungen sind vermieden bei der bevorzugten Wahl ø=0. In diesem Falle verengt sich die Festlegung der benachbarten Größenverhältnisse aus den Ansprüchen 1 und 2 darauf, daß alle benachbarten Größenverhältnisse gleich sind, und zwar gleich der m-ten Wurzel aus 2 bzw. 3.

Wie hoch m bei ø=0 gewählt werden kann, hängt ab vom - für den jeweiligen Anwendungsfall zu bestimmenden - maximalen Profilschrittlängenverhältnis $V_{max}$. Als $V_{max}$ ergibt sich

bei m=2 1,41 ,

bei m=3 1,58 ,

bei m=4 1,68 ,

bei m=5 1,74 und

bei m=6 1,78 .

Im Sonderfall m=2, wo es nur zwei unterschiedliche Größen $g_1$ und $g_2$ gibt und nur ein benachbartes Größenverhältnis V, ist das kennzeichnende Merkmal des Anspruches 1, daß nämlich alle $V_x$ gleich einer natürlichen Potenz des kleinsten $V_x$ sind, unvermeidlicherweise erfüllt, weil, mangels eines weiteren benachbarten Größenverhältnisses, das einzige benachbarte Größenverhältnis ohnehin von keinem weiteren verschieden sein kann. Deshalb ist die Geltung dieses Anspruches auf die Fälle m gleich oder großer 3 beschränkt.

Hingegen ist es auch im Falle m=2 neu, als benachbartes Größenverhältnis die Quadratwurzel von 2 zu nehmen, genähert also 1,4142 . Dies rechtfertigt den Nebenanspruch 2. Dieser Nebenanspruch entspricht unter Aufgabe der Einschränkung m>2 dem Anspruch 5. Weiterhin ist es neu, hierauf aufbauend die gesamte Folge aus Abwandlungen eines einzigen Ausschnittes zusammenzusetzen.

Obwohl die erfindungsgemäße besondere Bemessung der Schrittgrößen ursprünglich dem Ziel diente, Transpositionen, insbesondere auch virtuelle Transpositionen eines Themas zu schaffen, bewährt sich diese Schrittgrößenbemessung verblüffender Weise auch in solchen Folgen, die nur teilweise in dieser oder einer ähnlichen Regelmäßigkeit aufgebaut sind (siehe erstes Ausführungsbeispiel).

Die Erfindung wird nachfolgend anhand von vier Ausführungsbeispielen näher erläutert.

Die beiden ersten Ausführungsbeispiele und das vierte betriffen Fahrzeugreifen. Vorgegeben ist hier, daß die Gesamtanzahl n der Größen (pitches) 66 betragen soll. Bei den beiden ersten Ausführungsbeispielen soll weiterhin $V_{max}$ äußerstenfalls 1,65 betragen.

Im ersten Ausführungsbeispiel wird vom Mittel der Transposition und Inversion nur beschränkt Gebrauch gemacht. Eine vorteilhafte Folge lautet:

1 2 2 2 1
1
1 2 1
2 3 3 3 2
1 2 2 1
3 1 3
2 1 3 2 3 2 1
2 3 3 3 2
2 3 3 1 1 1
3 1 1 1 1 3
2 1 1 1 1 2
1 3 3 1
1 3 1
1 2 2 2 3
1 2 1 2

Die weiteren Ausführungsbeispiele sind ausschließlich aus verschiedenen Abwandlungen eines Themas zusammengesetzt (entsprechend Anspruch 6).

Um im zweiten Ausführungsbeispiel angesichts der kleinen Größenanzahl n zu einem günstigen Ergebnis zu gelangen, wird ø=0 gesetzt und damit alle Beschränkungen der virtuellen Transponierbarkeit vermieden. Entsprechend der Tabelle von Seite 17 ist dann m=3 zu wählen (so groß wie möglich, so klein wie nötig). Es gilt dann $V=V_1=V_2=2^{(1/3)}$. Die gerundeten Größen lauten:

$g_1 = 1,0000$
$g_2 = 1,2599$
$g_3 = 1,5874$

Es gilt sodann ein Thema festzulegen.

Es hat sich herausgestellt, daß die besten Ergebnisse erzielt werden, wenn das Thema alle (reellen) Größen in etwa gleicher Häufigkeit umfaßt. Weiterhin sollten alle drei verschiedenen Größen in etwa gleichen Repetitionen auftreten, wobei bei Reifen es sich empfiehlt, im Thema nur Repetitionen bis zu zwei gleichen Größen hintereinander vorzusehen; die Repetitionen werden bei virtueller Transposition ohnehin größer (siehe dazu auch vorletzten Absatz von Seite 16 und letzter Absatz von Seite 6 bis Seite 7 mitte).

Demnach sollten im Thema angeordnet werden je ein Einzelschritt der drei verschiedenen Größen und je eine zweifache Repetition der drei verschiedenen Größen. Hieraus folgt, daß das Thema 9 Schritte enthalten wird und 6 Schrittgrößenwechsel.

Aufgrund m=3 sind gerade 6 verschiedene Schrittgrößenwechsel möglich, nämlich:

1 2 , 2 1 ,
1 3 , 3 1 , und
2 3 , 3 2 .

Unbeschadet dessen, daß die innerhalb einer Zeile aufgezählten Schrittgrößenwechsel sich nur in der Orientierung unterscheiden und überdies die Beträge (nämlich V) in der ersten und der dritten Zeile übereinstimmen, empfiehlt es sich, im Thema alle Schrittgrößenwechsel etwa gleich häufig anzuordnen; in diesem Beispiel wird eine exakt gleichmäßige Verteilung gezeigt.

Nach obigen Ausführungen ergeben sich drei Möglichkeiten eines zum Ring geschlossenen Themas, nämlich:

3 2 2 1 2 3 3 1 1 oder
3 1 1 2 1 3 3 2 2 oder
1 2 2 3 2 1 1 3 3 .

Um die Folge aus verschiedenen Abwandlungen zusammensetzen zu können, muß das erwählte bislang zum Ring geschlossene Thema an irgendeiner Stelle aufgeschnitten werden. Der diesseitige und der jenseitige Schritt an der Aufschneidestelle sind gewissermaßen die Kuppelglieder, an die sich die jeweils nächste Abwandlung anschließt. Jedes zum Ring geschlossene Thema kann an so vielen verschiedenen Stellen aufgeschnitten werden, wie es Schritte enthält, diese hier also an 9 Stellen. Beispielsweise lauten die möglichen Themen, die aus dem ersten Ringthema abgeleitet werden können:

1. 3 2 2 1 2 3 3 1 1
2. 1 3 2 2 1 2 3 3 1
3. 1 1 3 2 2 1 2 3 3
4. 3 1 1 3 2 2 1 2 3
5. 3 3 1 1 3 2 2 1 2
6. 2 3 3 1 1 3 2 2 1
7. 1 2 3 3 1 1 3 2 2
8. 2 1 2 3 3 1 1 3 2
9. 2 2 1 2 3 3 1 1 3

Allen (aufgeschnittenen) Themen aus allen drei zum Ring geschlossenen Themen ist gemein, daß die Schrittgesamtzahl n=66 nur durch sehr wenige Zusammenstellungen verschiedener Transpositionslängen zu erzeugen ist und zwar muß entweder

einmal 0, einmal I, zweimal II und einmal III verwendet werden oder

dreimal 0, einmal I, und zweimal II.

Offensichtlich ist die erste Variante vielversprechender, weil hier alle möglichen Transpositionslängen ausgenutzt werden. Deshalb wird die zweite Variante ausgeschieden.

Danach verbleibt nach Auswahl eines Themas nur eine einzige Kombination von Abwandlungen, die alle nicht invertiert sind oder - was gleichbedeutend ist - die alle invertiert sind, und die die geforderte Schrittanzahl n=66 ergibt. Die Anzahl der hierfür möglichen - nicht zum Ring geschlossenen - Permutationen beträgt

$$\frac{5!}{1!\ 1!\ 2!\ 1!} = 3 \times 4 \times 5 = 60$$

Als nächstes sind die Kombinationen von Abwandlungen zu betrachten, die eine Inversion (oder - was gleichbedeutend ist - vier Inversionen) enthalten. Invertiert sein könnte die 0 oder die I oder die II, wobei egal ist, welche der beiden II, oder die III. Es gibt also vier verschiedene Kombinationen.

Liegt die Inversion auf der 0 oder der I oder der III, so gibt es, da sich an der Existenz einer Wiederholung, nämlich der II nichts ändert, genauso viele Permutationen wie oben, also 60. Bei der Kombination, wo die Inversion auf einer II liegt, entfällt die Wiederholung, es gibt also 120 Permutationen. Insgesamt gibt es also mit einer Inversion 300 Permutationen.

Als nächstes sind die Kombinationen von Abwandlungen zu betrachten, die zwei Inversionen (oder - was gleichbedeutend ist - drei Inversionen) enthalten. Invertiert sein könnte die:

1. 0 und I oder die
2. 0 und II oder die
3. 0 und III oder die
4. I und II oder die
5. I und III oder die
6. II und II oder die
7. II und III.

Bei den Kombinationen 2., 4. und 7. entfällt die Wiederholung; bei den 4 übrigen Kombinationen bleibt es bei einer Wiederholung der II bzw. II. Die Anzahl der möglichen Permutationen mit zwei Inversionen beträgt also

$$4 \times 60 + 3 \times 120 = 600$$

Höhere Inversionsanzahlen sind nicht zu betrachten; der Fall von 3 Inversionen ist aufgrund des Ringschlusses der zu erstellenden Folge äquivalent zu dem - bereits behandelten - Fall zweier Inversionen, wenn die betreffende Folge rückwärts herum gelesen wird, was bekanntlich das Frequenzspektrum unverändert läßt.

Nach Festlegung auf ein Thema verbleibt also nur noch folgende Vielzahl verschiedener Folgen:

$$60 + 300 + 600 = 960$$

Will man sämtliche Themen betrachten, die aus einem zum Ring geschlossenen Thema abzuleiten sind, so sind

$$9 \times 960 = 8640$$

verschiedene Folgen zu analysieren. Will man auch die Entscheidung für eines der drei Ringthemen offen lassen, so sind

$$3 \times 8640 = 25.920$$

Folgen zu analysieren. Ein Rechner, der $10^8$ Folgen pro Tag zu analysieren vermag, braucht hierfür nur 22,4 Sekunden. Angesichts dieser geringen Rechenzeit ist es für die Auswahl der besten Folge nicht erforderlich, weitere Gesichtspunkte zur Auswahl des besten zum Ring geschlossenen Themas und zur besten Aufschneidung zu berücksichtigen.

Allen etwa 26.000 zu analysierenden Folgen ist gemein, daß sie die Größenverteilung $n_1=27$ , $n_2=21$ und $n_3=18$ aufweisen. Unter Rückgriff auf die Formel von Seite 9 oben beträgt die Anzahl der möglichen Permutationen (einschließlich der, die nicht der bevorzugten Kombination der Merkmale der Ansprüche 6 und 5 entsprechen) mindestens

$$\frac{65!}{2 \times 27! \times 21! \times 18!} = 2^5 x5^2 x7^2 x11x13x19x23x29^2 x31^2 x37x41x43x47x53x59x61 = 1,157.797.308... \times 10^{27}$$

Zur Analyse sämtlicher Folgen dieser Größenverteilung sind $10^{19}$ Tage, also mehr als $10^{15}$ Jahre erforderlich.

Dieser Vergleich mag den großen Fortschritt verdeutlichen, der in der Reduktion der Anzahl der zu untersuchenden Folgen um mehr als 22 Zehnerpotenzen liegt. Er wird erzielt durch die Weiterbildung der Erfindung gemäß Anspruch 6 (wegen hier m>2 in Verbindung mit Anspruch 5; wäre m=2, dann durch Anspruch 2).

Zwar kann der Erfinder nicht genau wissen, wie leistungsfähig die Rechner anderer Fachleute des Faches in anderen Firmen sind; aufgrunddessen, was heutzutage an hardware überhaupt noch erhältlich ist, darf aber angenommen werden, daß dort schlechtestenfalls um den Faktor 1.000 langsamere Rechner eingesetzt werden. Statt 22,4 Sekunden würde dann eine Rechenzeit von 6,25 Stunden benötigt. Auch dies ist zumutbar.

Auffallend ist, daß die nach der Frequenzanalyse günstigen erfindungsgemäßen Folgen subjektiv noch besser bewertet werden; dies ist bei nicht erfindungsgemäßen Folgen meistens umgekehrt. Der Effekt liegt möglicherweise daran, daß unser Gehirn nach Ordnung sucht auch in der Analyse eines Geräusches - und sie bei erfindungsgemäßen Folgen in der Art der Zusammenstellung aus verschiedenen Abwandlungen eines einzigen Themas findet.

Welche Folge unter den erfindungsgemäßen schließlich die beste ist, läßt sich nicht generell sagen; vielmehr kommt es auf den Verwendungszweck an. Angenommen, der zu entwerfende Reifen soll in einer Form vulkanisiert werden, die in 7 gleichmäßige Segmente radial geteilt ist, so wird von besonderer Wichtigkeit sein, daß die 7. Harmonische in der Fourier-Analyse nur gering ist. Würde jedoch eine in 9 Segmente geteilte Form verwendet, so würde besonders auf die 9. Harmonische geachtet, damit nicht durch Überlagerung zweier ursächlich zwar verschiedener aber in ihrer Wirkung gleichgerichteter Effekte ein "Dröhner" entsteht. Weiterhin sind die verschiedenen Resonanzspektren verschiedener Fahrzeugaufhängungen und die verschiedenen bevorzugten Geschwindigkeiten verschiedener Fahrzeuggattungen zu berücksichtigen.

Dieses Ausführungsbeispiel abschließend werden nachfolgend zwei für verschiedene Zwecke bevorzugte erfindungsgemäße Folgen angegeben:

Die erste Folge ist entwickelt aus dem Thema

1 2 3 3 1 1 3 2 2

in der Abwandlungsabfolge

III 0 I II I

sodaß sie ausgeschrieben lautet:

2 2 2 2 3 3 1 1 1 1 3 3 3 3 2 2 1 1
1 2 3 3 1 1 3 2 2
2 3 1 1 1 1 2 2 1 1 3 3
3 1 1 2 2 2 2 3 3 2 2 1 1 1 1
2 3 1 1 1 1 2 2 1 1 3 3

Bei der Auswahl dieser Folge kam es auf besonders geringe Pegel im Bereich der 68. bis 71. Harmonischen an. Außerdem sollte sie in 7fach und 9fach geteilten Vulkanisationsformen gleich gute Ergebnisse liefern. Für die letzte eher ungewöhnliche Forderung konnte ein relativ hoher Pegel der 8. Harmonischen hingenommen werden.

Neben dieser für Vergleichsuntersuchungen entwickelten Folge hat die zweite eine größere Marktrelevanz; sie soll ausschließlich auf Reifen verwendet werden, die in 7fach geteilten Vulkanisationsformen hergestellt werden, wo es auf besonders geringe Amplitude der 7. Harmonischen ankommt. Ferner soll sich das gesamte Band von der 30. bis zur 120. Harmonischen durch geringe Pegel auszeichnen. Eine solche Folge wurde ausgehend vom Thema

3 2 2 1 2 3 3 1 1

in der Abwandlungsfolge

III 0 II I I

aufgefunden und lautet ausgeschrieben:

1 1 1 1 3 3 3 3 2 2 1 1 2 2 2 2 3 3
3 2 2 1 2 3 3 1 1
3 3 2 2 2 2 1 1 3 1 1 1 1 1 2 2
2 2 1 1 1 1 3 2 3 3 1 1
1 1 3 3 2 3 1 1 1 1 2 2

Das dritte Ausführungsbeispiel zeigt eine Folge mit ø=1 und m=5. Gemäß Anspruch 4 sind alle $V_x$ gleich der 6. Wurzel von 2. Die kleinste Schrittgröße wird wieder als Einheitsgröße betrachtet. Die übrigen Schrittgrößen lauten dann gerundet:

$g_2$ = 1,1225

$g_3$ = 1,2599

$g_4$ = 1,4142

$g_5$ = 1,5874

Als Thema wird zugrunde gelegt (entsprechend der auf Seite 13 vorgestellten Schreibweise):

0: 1 1 2 1 4 4 2 4 2 2 1 4

Entsprechend der Schreibweise von Seite 14 wird dieses Thema nachfolgend als "0" bezeichnet. Von diesem Thema ist eine Transposition reell möglich, weil in Anwendung der Formel von Seite 11 m=5, a=4 also t=1 ist. Die Transposition I lautet:

I: 2 2 3 2 5 5 3 5 3 3 2 5

Weitere reelle Transpositionen existieren nicht. Eine Transposition II (also Streckung um $V^2$) ist auch virtuell nicht möglich, da die Schrittgröße $g_4 x V^2 = g_5 x V$ nicht als Doppelschritt dargestellt werden kann. Hingegen ist die virtuelle Transposition III möglich; sie lautet:

III: 4 4 5 4 1 1 1 1 5 1 1 5 5 4 1 1

[hnlich wie die Transposition II sind auch die Transpositionen IV und V nicht möglich, weil die Schrittlänge $2^{(5/6)}$ nicht vorgesehen ist. Die nächsten möglichen Transpositionen sind also

VI: 1 1 1 1 2 2 1 1 4 4 4 4 2 2 4 4 2 2 2 2 1 1 4 4

und, als reelle Transposition davon, schließlich

VII: 2 2 2 2 3 3 2 2 5 5 5 5 3 3 5 5 3 3 3 3 2 2 5 5

Die Transposition VIII ist aus dem gleichen Grund nicht möglich wie die Transposition II. Die Transposition IX wäre zwar möglich, führt aber zur 8-fachen Repetition der 1; so lange Repetitionen sind selbst an flankenoffenen Keilriemen, für die diese Folge gedacht ist, unerwünscht.

Mit der Abwandlungsfolge

0 III I I VII VI

ergibt sich ausgeschrieben folgende Größenfolge:

1 1 2 1 4 4 2 4 2 2 1 4

4 4 5 4 1 1 1 1 5 1 1 5 5 4 1 1

5 2 3 3 5 3 5 5 2 3 2 2

2 2 3 2 5 5 3 5 3 3 2 5

5 5 2 2 3 3 3 3 5 5 3 3 5 5 5 5 2 2 3 3 2 2 2 2

4 4 1 1 2 2 2 2 4 4 2 2 4 4 4 4 1 1 2 2 1 1 1 1

(100 pitches)

Beim vierten und letzten Ausführungsbeispiel ist wieder ø=0 gesetzt. Abweichend von den beiden vorherigen Ausführungsbeispielen ist hier als Radikant die 3 gewählt.

Diese Folge soll sich wiederum auf Fahrzeugluftreifen beziehen und ein für diesen Anwendungsfall ungewöhnlich großes maximales Größenverhältnis aufweisen. Damit die Abriebunterschiede zwischen großen und kleinen Klötzen hinreichend klein bleiben, ist eine stärkere Lamellierung der größeren Klötze als der kleineren erforderlich, wobei der Fachmann die für ein bestimmtes Profil erforderliche Lamellenvariation nach grober Vorabschätzung in der Regel nach einer Versuchsreihe festlegen wird.

Zweckmäßigerweise werden für diese Versuche Reifen erstellt, die die jeweils vorgesehenen Schrittgrößen in langen Repetitionen enthalten und als Kriterium wird die Abriebhöhe dies- und jenseitig einer Grenze zwischen zwei aneinanderstoßenden langen Repetitionen verschiedener Größen betrachtet.

Um den mit der Versuchsreihe verbundenen Aufwand in engen Grenzen zu halten, soll diese Folge aus nur zwei Schrittgrößen zusammengesetzt werden. Die Versuchsreifen enthalten dann zweckmäßigerweise etwa auf einer Hälfte ihres Umfanges große Klötze in ununterbrochener Repetition und auf dem übrigen Umfangsteil kurze Klötze in ununterbrochener Repetition. Diese Reifen zeigen dann genau einen Wechsel von kurzen auf lange pitches und einen von langen auf kurze pitches.

Nachdem so die optimale Lamellenanzahl und -tiefe gefunden ist, kann zu dem Problem zurückgekehrt werden, mit dessen Lösung sich die Erfindung beschäftigt, nämlich wie eine günstige Größenfolge zusammenzusetzen ist.

Die kürzeste Schrittgröße wird wieder als Einheitsgröße definiert, also $g_1$=1,0000. Die andere Schrittgröße ist die zweite Wurzel aus 3, also genähert $g_2$=1,73205.

Wie bei pitch-Folgen für Luftreifen üblich, soll die größtzulässige Repetition etwa beim 6-fachen der kleinsten Größe liegen. - Wenn im Thema eine 2fach-Repetition der großen Größe erscheint, dann würde daraus in der II. Transposition aufgrund des Radikanten 3 eine 6fach-Repetition mit der Gesamtlänge 10,3923; daraus folgt, daß entweder im Thema keine Repetition der großen Größe erscheinen darf, oder, daß nur die I. (virtuelle) Transposition zu gebrauchen ist.

Zum Zwecke der Vergleichbarkeit mit dem ersten Beispiel soll auch hier die Schrittgesamtzahl n 66 betragen. Diese Gesamtzahl kann realisiert werden durch

a) zwei Abwandlungen (0 oder 0) mit je 10 Schritten, eine Abwandlung (I oder I) mit 16 Schritten und eine Abwandlung (II oder II) mit 30 Schritten

oder

b) drei Abwandlungen (0 oder 0) mit je 10 Schritten und zwei Abwandlungen (I oder I) mit je 18 Schritten

oder

c) eine Abwandlung (0 oder 0) mit 9 Schritten und drei Abwandlungen (I oder I) mit je 19 Schritten.

Im Falle a) muß das Thema dreimal die Größe 2 und siebenmal die Größe 1 enthalten, um auf die Schrittzahl 16 in der I. Abwandlung zu kommen. Damit in den II. Abwandlungen keine zu langen Repetitionen der Größe 2 entstehen, darf überdies im Thema keine Repetition der Größe 2 erscheinen. Dies wäre erreichbar mit einem Thema wie folgt:

```
0: 1 1 2 1 1 2 1 2 1 1 ( 7x1, 3x2)
I: 2 2 1 1 1 2 2 1 1 1 2 1 1 1 2 2 ( 9x1, 7x2)
II: 1 1 1 1 1 1 2 2 2 1 1 1 1 1 1 2 2 2 1 1 1 1 2 2 2 1 1 1 1 1 1 ( 21x1, 9x2)
```

Eine Folge hieraus würde also 44 kurze und 22 lange pitches enthalten.

Im Falle b) muß das Thema viermal die Größe 2 und sechsmal die Größe 1 enthalten, um auf die Schrittzahl 18 in der I. Abwandlung zu kommen. Da hier keine II. Abwandlung vorgesehen ist, ist im Thema eine 2fach-Repetition der 2 zulässig, aus der in I. Transposition eine 6fach-Repetition der 1 wird. Daneben ist auch eine 3fach-Repetition der 1 ohne weiteres möglich, aus der in I. Transposition eine 3fach-Repetition der 2 wird. Alle zulässigen Repetitionen und die beschriebenen Größenhäufigkeiten werden in folgendem Thema realisiert:

```
0: 1 2 1 1 1 2 2 1 1 2 ( 6x1, 4x2)
I: 2 1 1 1 2 2 2 1 1 1 1 1 1 2 2 1 1 1 ( 12x1, 6x2)
```

Eine Folge hieraus würde also 42 kurze und 24 lange pitches enthalten.

Im Falle c) muß das Thema fünfmal die Größe 2 und viermal die Größe 1 enthalten, um auf die Schrittzahl 19 in der I. Abwandlung zu kommen. Es sind die gleichen Repetitionen wie im Falle b) zulässig. Zusätzlich ist zu beachten, daß drei I. Abwandlungen hintereinander vorgesehen sind; entsprechend Anspruch 9 sollte mindestens eine der drei I. Abwandlungen in Inversion eingesetzt sein, vorzugsweise die mittlere. - Weiterhin soll gemäß Anspruch 8 an zumindest einer der Fügestellen eine solche Repetition entstehen, die in ihrem Grad größer 2 ist und keinem ganzzahligen Vielfachen des Radikanten, hier 3, entspricht, also eine Repetition, die innerhalb der Abwandlungen nicht möglich ist.

Aus all diesen Bedingungen ergibt sich im Falle c) als Thema:

```
0: 2 1 2 2 1 2 2 1 1 ( 4x1, 5x2)
I: 1 1 1 2 1 1 1 1 1 1 2 1 1 1 1 1 1 2 2 ( 15x1, 4x2)
```

Eine Folge hieraus - vorzugsweise entsprechend der Abwandlungsfolge 0 I I I - würde 49 Schritte der Größe 1 und nur 17 Schritte der Größe 2 enthalten.

Nun soll entsprechend Anspruch 11 die Bogenlängenanteile der verschiedenen Größen insgesamt etwa gleich groß sein, die Häufigkeit der verschiedenen Größen sich also etwa umgekehrt proportional zu deren Längen verhalten. - Nach diesem Aspekt ist der Fall b) der günstigste, für den gilt:

Gesamtbogenlänge der Größe 1 = 42x1,0000 = 42,0000
Gesamtbogenlänge der Größe 2 = 24x1,73205= 41,5692

Das für den Fall b) genannte Thema wird zweckmäßigerweise gemäß der Abwandlungsfolge I 0 0 I 0 , die an zwei Nahtstellen eine 4fach-Repetition der 1 ergibt, zur Folge gefügt:

```
2 1 1 1 2 2 2 1 1 1 1 1 1 2 2 1 1 1
1 2 1 1 1 2 2 1 1 2
2 1 1 2 2 1 1 1 2 1
1 1 1 2 2 1 1 1 1 1 1 2 2 2 1 1 1 2
1 2 1 1 1 2 2 1 1 2
```

Unabhängig vom Profilmuster bzw. der Profilmusterfolge ermöglicht die Erfindung mittels besonders günstiger Bemessung der Schrittgrößen, die wiederum besonders günstige und besonders leicht aufzufindende Schrittgrößenfolgen ermöglicht, den Bau besonders leiser, profilierter, umlaufend beweglicher Bauteile, insbesondere den Bau besonders leiser Reifen und flankenoffener Keilriemen.

## Patentansprüche

1. Umlaufend bewegliches Bauteil (1), welches mit Negativen (2) und jeweils zwischen zwei Negativen (2) befindlichen Positiven (3) ausgestattet ist, wobei die Form eines jeden Negatives (2) oder Positives (3) in einem Schritt oder in mehreren Schritten festgelegt ist, wobei jeder Schritt eine Größe in Umlaufrichtung aufweist und die Größen aus einer Vielzahl m>2 zur Verfügung stehender Werte ($g_1$, $g_2$, ..., $g_m$) gewählt sind und zumindest einige aufeinander folgende Größen voneinander verschieden sind, **dadurch gekennzeichnet,** daß die benachbarten Größenverhältnisse $V_x$ so gewählt sind, daß alle $V_x$ gleich einer natürlichen Potenz von V sind, wobei für alle x aus den natürlichen Zahlen von 1 bis m-1 das benachbarte Größenverhältnis $V_x$ wie folgt definiert ist:

$$V_x = \frac{g_x + 1}{g_x}$$

und wobei V als das kleinste aller $V_x$ definiert ist und unter einer natürlichen Potenz eine solche Potenz verstanden wird, die als Exponenten eine natürliche Zahl aufweist, und wobei zumindest eine folgender Bedingungen erfüllt ist:

    a) Alle $V_x$ sind größer als 1,2 und/oder
    b) V ist gleich der (m+ø)ten Wurzel eines Radikanten, wobei der Radikant 2 oder 3 ist und ø Element der natürlichen Zahlen inclusive 0.

2. Umlaufend bewegliches Bauteil (1), welches mit Negativen (2) und jeweils zwischen zwei Negativen (2) befindlichen Positiven (3) ausgestattet ist, wobei die Form eines jeden Negatives (2) oder Positives (3) in einem Schritt oder in mehreren Schritten festgelegt ist, wobei jeder Schritt eine von zwei zur Verfügung stehenden Größen ($g_1$, $g_2$) in Umlaufrichtung aufweist und zumindest einige aufeinander folgende Größen voneinander verschieden sind, **dadurch gekennzeichnet,** daß das (einzige) benachbarte Größenverhältnis V gleich der (m+ø)ten Wurzel eines Radikanten ist, wobei der Radikant 2 oder 3 ist und ø Element der natürlichen Zahlen inclusive 0.

3. Umlaufend bewegliches Bauteil (1) nach Anspruch 1 dadurch gekennzeichnet, daß Alternativ-Merkmal b) des Anspruches 1 erfüllt ist, wonach V gleich der (m+ø)ten Wurzel eines Radikanten, wobei der Radikant 2 oder 3 ist und ø Element der natürlichen Zahlen inclusive 0.

4. Umlaufend bewegliches Bauteil (1) nach Anspruch 2 oder 3 dadurch gekennzeichnet, daß alle $V_x$ gleich sind.

5. Umlaufend bewegliches Bauteil (1) nach Anspruch 2 oder 3 dadurch gekennzeichnet, daß ø gleich 0 ist.

6. Umlaufend bewegliches Bauteil (1) nach Anspruch 1 oder 2 dadurch gekennzeichnet, daß die gesamte Größenfolge zusammengesetzt ist aus mindestens drei verschiedenen Abwandlungen eines einzigen Ausschnittes der Größenfolge, wobei unter Abwandlungen nur Transpositionen oder Inversionen oder deren Verknüpfungen oder der abzuwandelnde Ausschnitt selbst verstanden werden, wobei eine Transposition eines Ausschnittes dessen gleichmäßige Streckung oder Stauchung um eine natürliche Potenz des kleinsten benachbarten Größenverhältnisses V als Streckfaktor bzw. Stauchquotient ist und eine Inversion eines Ausschnittes die Wiedergabe dieses Ausschnittes in umgedrehter Reihenfolge ist.

7. Umlaufend bewegliches Bauteil (1) nach den Ansprüchen 1 und 3 und 6 oder nach den Ansprüchen 2 und 6 dadurch gekennzeichnet, daß zumindest eine Abwandlung des Ausschnittes eine virtuelle Schrittgröße enthält, wobei als "virtuelle Schrittgröße" eine solche Größe definiert ist, die größer als $g_m$ ist und als Mehrfach-Schritt realisiert wird, wobei unter einem Mehrfachschritt ein Paar (im Falle des Radikanten 2) bzw. ein Tripel (im Falle des Radikanten 3) hintereinander angeordneter gleicher Einzelschritte einer Einzelgröße zwischen $g_1$ und $g_m$ verstanden wird.

8. Umlaufend bewegliches Bauteil zumindest nach Anspruch 6 dadurch gekennzeichnet, daß die Schrittgrößenfolge an zumindest einer der Fügestellen von Abwandlungen eine Repetition aufweist, deren Grad größer 2 und von allen ganzzahligen Vielfachen des Radikanten verschieden ist.

9. Umlaufend bewegliches Bauteil zumindest nach Anspruch 6 dadurch gekennzeichnet, daß die Folge mindestens eine Abwandlung eines Themas enthält, die in ihrer Größenreihenfolge invers zum Thema oder einer Transposition davon ist.

10. Umlaufend bewegliches Bauteil nach Anspruch 9 dadurch gekennzeichnet, daß zueinander inverse Abwandlungen (incl. dem Thema selbst) direkt hintereinander angeordnet sind.

11. Umlaufend bewegliches Bauteil (1) nach Anspruch 1 oder 2, dadurch gekennzeichnet, daß die Häufigkeit der verschiedenen Größen ($g_1$, $g_2$, ... $g_m$) sich in der Größenfolge etwa umgekehrt proportional zu den Größen selbst verhalten.

12. Umlaufend bewegliches Bauteil nach zumindest einem der vorangehenden Ansprüche dadurch gekennzeichnet, daß es sich um einen Fahrzeugluftreifen handelt mit Querrillen, die Negative bilden und zwischen sich Positive voneinander abgrenzen.

13. Umlaufend bewegliches Bauteil nach zumindest einem der vorangehenden Ansprüche dadurch gekennzeichnet, daß es sich um einen Keilriemen handelt mit offenen Flanken, die Negative bilden und zwischen sich Positive voneinander abgrenzen.

## Claims

1. Rotary component (1), which is equipped with negatives (2) and with positives (3) between each two negatives, the form of each negative (2) or positive (3) being set in a step or a plurality of steps, with each step having a quantity in the direction of rotation and the quantities being selected from a plurality m>2 of available values ($g_1$, $g_2$, ..., $g_m$) and at least some successive quantities are different from one another, characterised in that the neighbouring quantity ratios $V_x$ are so selected that all $V_x$ are equal to a natural power of V, where for all x from the natural numbers from 1 to m-1 the neighbouring quantity ratio $V_x$ is defined as follows:

$$Vx = \frac{g_x+1}{g_x}$$

and
where V is defined as the smallest of all $V_x$ and a natural power is understood to be a power that has a natural number as exponent, and where at least one of the following conditions is met:

a) All $V_x$ are larger than 1,2 and/or
b) V is equal to the (m+ø)th root of a radicand, where the radicand is 2 or 3 and ø element of the natural numbers including 0.

2. Rotary component (1), which is equipped with negatives (2) and with positives (3) between each two negatives (2), the form of each negative (2) or positive (3) being set in one or in a plurality of steps, each step having one of two available quantities ($g_1$, $g_2$) in the direction of rotation and at least some successive quantities are different from one another, characterised in that the (only) neighbouring quantity ratio V is equal to the (m+ø)th root of a radicand, where the radicand is 2 or 3 and ø an element of the natural numbers including 0.

3. Rotary component (1) according to claim 1, characterised in that alternative feature b) of claim 1 is fulfilled, according to which V is equal to the (m+ø)th root of a radicand, where the radicand is 2 or 3 and ø an element of the natural numbers including 0.

4. Rotary component (1) according to claim 2 or 3, characterised in that all $V_x$ are equal.

5. Rotary component (1) according to claim 2 or 3, characterised in that ø is equal to 0.

6. Rotary component (1) according to claim 1 or 2, characterised in that the overall pitch sequence is composed of at least three different variants of a single sector of the pitch sequence, variants being understood only as transpositions or inversions or their conjunctions or the sector to be modified itself, where a transposition of a sector is its even extension or compression by a natural power of the smallest neighbouring quantity ratio V as extension factor or compression quotient, and an inversion of a sector is the reproduction of this sector in reverse sequence.

7. Rotary component (1) according to claims 1 and 3 and 6 or according to claims 2 and 6, characterised in that at least one variant of the sector contains a virtual step quantity, "virtual step quantity" being defined as a quantity which is larger than $g_m$ and realised as a multiple step, and a multiple step being understood to be a pair (in the case of the radicand 2) or a triple (in the case of the radicand 3) of equal single steps of a single quantity between $g_1$ and $g_m$ positioned behind one another.

8. Rotary component at least according to claim 6, characterised in that the step quantity sequence at at least one of the junction points of the variants has a repetition, whose degree is larger than 2 and different from all whole number multiples of the radicand.

9. Rotary component at least according to claim 6, characterised in that the sequence contains at least one variant of a theme, which in its pitch sequence is inverse to the theme or to a transposition of it.

10. Rotary component according to claim 9, characterised in that variants inverse to one another (including the theme itself) are positioned directly behind one another.

11. Rotary component (1) according to claim 1 or 2, characterised in that the frequency of the different quantities ($g_1$, $g_2$, ... $g_m$) in the pitch sequence is approximately inversely proportional to the quantities themselves.

12. Rotary component according to at least one of the preceding claims, characterised in that a pneumatic vehicle tyre is involved, having transverse notches which form negatives and define positives of one another therebetween.

13. Rotary component according to at least one of the preceding claims, characterised in that a V-belt is involved, having open flanks which form negatives and define positives of one another therebetween.

**Revendications**

1. Composant à mouvement tournant continu (1), qui est équipé de zones négatives (2) et de zones positives (3) qui se trouvent chaque fois entre deux zones négatives (2), étant précisé que la forme de chacune des zones négatives (2) ou positives (3) est définie en un pas ou en plusieurs pas, étant précisé que chaque pas présente une certaine valeur selon la direction périphérique et que les valeurs sont choisies à partir d'une pluralité m>2 de valeurs ($g_1$, $g_2$, ..., $g_m$) dont on dispose et qu'au moins quelques valeurs se suivant les unes les autres sont différentes l'une de l'autre, caractérisé par le fait que les rapports $V_x$ entre valeurs voisines sont choisis de façon que tous les $V_x$ soient égaux à une puissance naturelle de V,

étant précisé que pour tous les x pris parmi les nombre naturels allant de 1 à m-1, le rapport $V_x$ de valeurs voisines se définit comme suit:

$$V_x = \frac{g_x + 1}{g_x}$$

et étant précisé que V est défini comme le plus petit de tous les $V_x$ et que sous la désignation de puissance naturelle il faut comprendre une puissance qui présente comme exposant un nombre naturel, et étant précisé qu'au moins l'une des conditions suivantes est remplie:

a) tous les $V_x$ sont supérieurs à 1,2 et/ou
b) V est égal à la racine d'ordre (m+ø) d'un nombre placé sous le radical, le nombre placé sous le radical étant 2 ou 3 et ø, étant un élément des nombre naturels, y compris 0.

2. Composant à mouvement tournant continu (1), qui est équipé de zones négatives (2) et de zones positives (3) qui se trouvent chaque fois entre deux zones négatives (2), étant précisé que la forme de chacune des zones négatives (2) ou positives (3) est définie en un pas ou en plusieurs pas, étant précisé que chaque pas présente, selon la direction périphérique, l'une de deux valeurs ($g_1$, $g_2$) dont on dispose et qu'au moins quelques valeurs, se suivant l'une l'autre, sont différentes l'une de l'autre,

caractérisé par le fait que le (unique) rapport de valeurs voisines V est égal à racine d'ordre (m+ø) d'un nombre placé sous le radical, le nombre placé sous le radical étant 2 ou 3 et ø, étant un élément des nombre naturels, y compris 0.

**3.** Composant à mouvement tournant continu (1) selon la revendication 1, caractérisé par le fait qu'est remplie la mention variante b) de la revendication 1, selon laquelle V est égal à la racine d'ordre (m+ø) d'un nombre placé sous le radical, le nombre placé sous le radical étant 2 ou 3 et ø, étant un élément des nombres naturels, y compris 0.

**4.** Composant à mouvement tournant continu (1) selon la revendication 2 ou 3, caractérisé par le fait que tous les $V_x$ sont égaux.

**5.** Composant à mouvement tournant continu (1) selon la revendication 2 ou 3, caractérisé par le fait que ø est égal à 0.

**6.** Composant à mouvement tournant continu (1) selon la revendication 1 ou 2, caractérisé par le fait que la totalité de la séquence de valeurs est composée d'au moins trois variantes différentes d'une unique portion de la séquence de valeurs,
étant précisé que sous le nom de variantes il ne faut comprendre que des transpositions ou des inversions, ou leurs liaisons logiques, ou la portion de séquence elle-même dont on prend une variante,
étant précisé qu'une transposition d'une portion de séquence est sa multiplication symbolique régulière, ou sa division symbolique régulière, par une puissance naturelle du plus petit rapport V de valeurs voisines pris comme facteur de la multiplication symbolique ou comme quotient de la division symbolique et
qu'une inversion d'une portion de séquence est la répétition de cette portion de séquence, lue en sens inverse.

**7.** Composant à mouvement tournant continu (1) selon les revendications 1 et 3 et 6 ou selon les revendications 2 et 6, caractérisé
par le fait qu'au moins une variante de la portion de séquence contient une valeur virtuelle du pas,
étant précisé que sous le nom de "valeur virtuelle de pas" il faut comprendre une valeur qui est supérieure à $g_m$ et se réalise en tant que pas multiple, étant précisé que sous la dénomination de pas multiple il faut comprendre une paire (dans le cas du nombre 2 sous le radical) ou un trio (dans le cas du nombre 3 sous le radical) de pas individuels identiques, disposés l'un derrière l'autre, d'une unique valeur de pas valant entre $g_1$ et $g_m$.

**8.** Composant à mouvement tournant continu selon au moins la revendication 6, caractérisé par le fait que la séquence de valeurs de pas présente en au moins l'un des endroits de jonction de variantes une répétition dont le degré est supérieur à 2 et est différent de tous les multiples entiers du nombre placé sous le radical.

**9.** Composant à mouvement tournant continu selon au moins la revendication 6, caractérisé par le fait que la séquence contient au moins une variante d'un motif qui, en ce qui concerne sa séquence de valeurs, est l'inverse du motif ou d'une transposition de ce motif.

**10.** Composant à mouvement tournant continu selon la revendication 9, caractérisé par le fait que des variantes inverses l'une de l'autre (y compris le motif lui-même) sont disposées directement l'une derrière l'autre.

**11.** Composant à mouvement tournant continu (1) selon la revendication 1 ou 2, caractérisé par le fait que la fréquence des différentes valeurs ($g_1$, $g_2$, ... $g_m$) varie, dans la séquence de valeurs, de façon à peu près inversement proportionnelle aux valeurs elles-mêmes.

**12.** Composant à mouvement tournant continu selon au moins l'une des revendications précédentes, caractérisé par le fait qu'il s'agit d'un pneumatique de véhicule présentant des cannelures transversales qui forment des zones négatives et qu'entre ces zones négatives des zones positives les limitent l'une de l'autre.

**13.** Composant à mouvement tournant continu selon au moins l'une des revendications précédentes, caractérisé par le fait qu'il s'agit d'une courroie trapézoïdale à flancs ouverts qui forment des zones négatives et qu'entre ces zones négatives des zones positives les limitent l'une de l'autre.

# FIG. 1